# EUROPEAN PATENT APPLICATION

(11) **EP 1 128 251 A2**
(43) Date of publication of application: **29.08.2001**
(21) Application number: 01301170.5
(22) Date of filing: 09.02.2001
(51) Int. Cl.: G06F 3/023

(54) **Method of programming a hot key**

(30) Priority: 22.02.2000 US 510256
(71) Applicant: Hewlett-Packard Company, Palo Alto, CA 94304 (US)
(72) Inventor: Fong, Chee Keat, Singapore 120611 (MY); Kang, Alex Beng Hong, Singapore 141150 (MY)
(74) Representative: Jehan, Robert

(57) **Abstract**

The disclosed method of programming a hot key on a computing device is less cumbersome and more intuitive compared to prior art methods. To program a hot key (14), a user enters a key sequence or combination associated with programming of a particular hot key (14). The method on detecting the key sequence or combination determines a filename of an application running in the foreground. The method associates the application with the hot key (14) by writing to a configuration file. The user is then able to launch the selected application by activating the programmed hot key (14).

## Description

This invention relates to a method of programming a hot key on a computing device preferably for quickly launching an associated application on the computing device.

With the advent of more powerful computing devices which are able to run an abundance of application software, one-touch hot keys for launching frequently used applications are now becoming a common feature in new computing devices. For example in the Jornada 620, a trademarked handheld personal computer (H/PC) available from Hewlett-Packard, a row of hot keys is dedicated for such a purpose. The Jornada 620 also has four configurable hard icons on a touch-screen display for the same purpose as the hot keys. These hot keys and hard icons are user-programmable. Each hot key or hard icon has associated with it an application. The association information is maintained in a configuration file or registry database. Each record in the configuration file consists of two fields, a hot key or hard icon field and a field which contains the executable filename of an associated application.

Currently, programming of these hot keys and hard icons is cumbersome and user-unfriendly even to a reasonably computer literate user. For example, in the Jornada 620 H/PC, a user has to perform quite a tedious sequence just to program one hot key. In such a programming sequence, the user is required to invoke a hot key programming feature. After the hot key programming feature is invoked, a dialog box will be presented to the user for changing existing or entering new association data. The user is required to select an entry in the dialog box which corresponds to a particular hot key to be programmed. Next, the user is required to determine the filename, including the pathname of an application to be associated with the selected hot key. Once the filename is determined, the user enters the filename against the selected entry in the dialog box. To aid the user in locating the executable file, a browse feature is provided for the user to traverse the file system on the H/PC. The entered data is then written to a corresponding record in a configuration file. Although such a hot key programming method works, it suffers several disadvantages. One of the disadvantages is that several steps are required to perform the method. Such a method is not intuitive to a novice user. Another disadvantage associated with such a method is that the method requires the user to know the name of the executable file in order for the user to be able to locate it. Some executable filenames are obscure and thus very difficult to find. For example, the executable file for the MICROSOFT POCKET INTERNET EXPLORER application (a trademarked web browser application available from Microsoft, Redmond, Washington) is named iexplore.exe. As another example, the executable file for the CONTACTS application in the MICROSOFT POCKET OUTLOOK suite of applications (a trademarked personal information management suite of applications available from Microsoft, Redmond, Washington) is named obscurely as addrbook.exe. As yet another example, the MICROSOFT POCKET WORD application (a trademarked word processing application available from Microsoft, Redmond, Washington) is named pword.exe. There is no stopping provider of applications from using even more obscure names. Therefore, to an inexperienced person, it may be an impossible task to locate the executable filename of an application. Such a user will usually have to be contented with a default factory programming of the hot keys and hard icons. To further complicate locating an executable filename, a system administrator may also install an executable anywhere in a file system instead of a default location. Such a file system can potentially have a very large number of directories and subdirectories, making searching for a particular file a very tedious and often insurmountable task.

From the foregoing, the prior art therefore has a need for a more user-friendly and intuitive method of programming a hot key.

According to an aspect of the present invention, there is provided a method of programming a hot key as specified in claim 1.

According to another aspect of the present invention, there is provided a program storage device as specified in claim 9.

A preferred embodiment provides a method of programming a hot key on a computing device which involves activating the hot key to initiate programming of the hot key in a programming mode. Preferably such activating of the hot key involves activating only the hot key for a prolonged period to differentiate activating the hot key to launch an associated application. The method next selects an application on the computing device. Preferably, such selecting of an application involves selecting an application which is currently running in a foreground. For such a selection, the application would be required to be run in the foreground prior to the initiation of the programming mode. Finally, the method associates the selected application with the hot key such that activation of the hot key in an application-launching mode will launch the selected application. The association data of a hot key an its associated application is preferably maintained in a configuration file.

An embodiment of the present invention is described below, by way of example only, with reference to the accompanying drawings, in which:
Figure 1 is a block diagram of hardware components on a computing device.
Figure 2 is an isometric view of the computing device in Figure 1, having hot keys and hard icons for quick launching of applications associated with these hot keys and hard icons.
Figure 3 is a block diagram of hardware and software components of the computing device in Figure 1 which are relevant to the described embodiment, implemented in a keyboard driver, a touch input driver and an external keyboard application.
Figure 4 is a sequence of steps for programming a hot key for implementing the method in Figure 3.

Hereafter, a preferred embodiment is described in the context of programming a hot key on a handheld personal computer (H/PC) such as the Jornada 620 available from Hewlett-Packard. However, it is to be understood that the embodiment is equally applicable to other types of computing devices such as a palm-sized PC, notebook PC and a desktop PC.

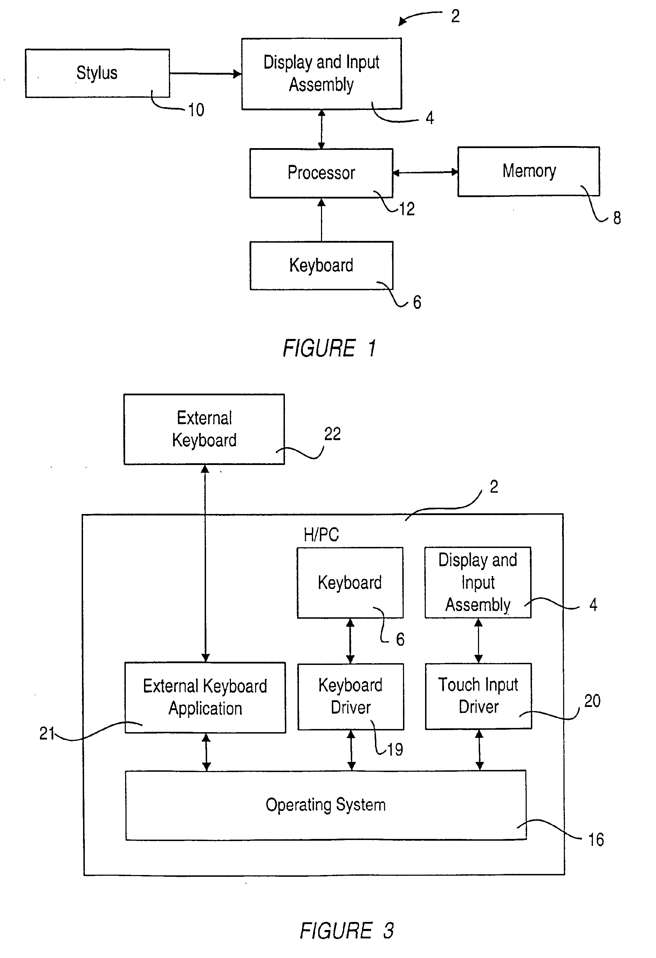

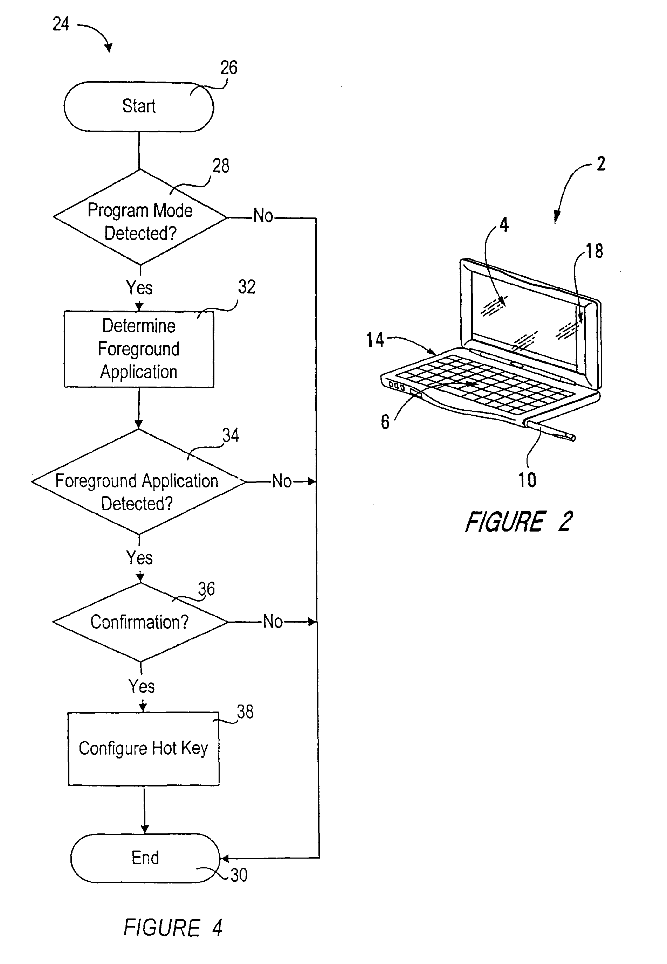

Figure 1 is a block diagram of major hardware components of a typical pen-based H/PC 2.
The H/PC 2 has a display and input assembly 4, a QWERTY keyboard 6, a memory 8, a pen or stylus 10 and a processor 12. The keyboard 6 includes a row of hot keys 14 (Figure 2). These hot keys 14 are activated for quick launching of applications which are associated with the hot keys 14. An operating system (OS) 16 (Figure 3) which manages the operations of the H/PC 2 resides in the memory 8. The display and input assembly 4 is both an input and an output device. When acting as an output device, the assembly receives data from the processor 12 and displays that data on a suitable display screen. The display screen is preferably a liquid crystal display (LCD). The input device of the display assembly 4 is preferably a thin, clear membrane which covers the LCD display and which is sensitive to the position of the stylus 10 on its surface. With such a structure, the membrane of the display assembly 4 serves as an input tablet for providing a touch-screen input means. On the input device are four hard icons 18. Two of these hard icons are pre-programmed for quick launching of applications. The other two hard icons are pre-programmed in the factory to perform other tasks such as activating the scroll up and scroll down features in a currently running application.

Figure 2 is an isometric view of the H/PC 2 showing the positions of the hot keys 14 and the hard icons 18. These hot keys 14 and the hard icons 18 are user-programmable to configure them for one-touch launching of applications.

Figure 3 is a block diagram showing some software and hardware components which are relevant to the preferred embodiment.
The software components reside in the memory 8 in Figure 1. The software components include the OS 16, a keyboard driver 19, a touch input driver 20 and an external keyboard application program 20. Other application programs (not shown) also reside in the memory 8. Application programs are not automatically launched on power up of the H/PC 2 but are selectively launched by a user. When power is applied to the H/PC 2, the processor 12 causes the OS 16 and the drivers 19, 20 to run. The OS 16 is the main control program of the H/PC 2 that schedules tasks, manages storage, and handles communication with peripherals. In this preferred embodiment, the OS 16 is the Windows CE OS (a trademarked OS for mobile-computing devices available from Microsoft, Redmond, Washington). The OS 16 presents a basic user interface when no applications are running. When applications are run, the applications communicate with the OS 16. The keyboard driver 19 is a program that extends the OS 16 to support the keyboard 6. The keyboard driver 19 scans the keyboard 6 to detect key depressions on the keyboard 6. When a key depression is detected, the keyboard driver 19 forwards information related to the key depression to the OS 16 using the appropriate application programming interface (API) calls. The OS 16 on receiving the information either channels the key depression information to a currently running application or performs tasks associated with the key depressions. The touch-input driver 20 performs tasks similar to the keyboard driver 19 for supporting the display and input assembly 4.

The external keyboard application 21 supports a portable external keyboard 22 which is about ninety percent the size of a full-sized keyboard. This external keyboard 22 allows more comfortable typing as compared to the keyboard 6 on the H/PC 2. This external keyboard 22 is connected to a serial port (not shown) of the H/PC 2. To use such an external keyboard, a user launches the external keyboard application 21. The external keyboard application 21 receives information sent by the external keyboard 22 via the serial port and translates the information to the appropriate API calls for sending the information to the OS 16.

In this preferred embodiment, the hot key programming method is implemented in the keyboard driver 19, the touch input driver 20 and the external keyboard application 21. In the ensuing description, the hot key programming method is described in the context of only the keyboard driver 19. It should be understood that the method works in a similar manner in the touch input driver 20 and the external keyboard application 21. Figure 4 is a sequence 24 of steps for programming a hot key 14. On detecting that a key sequence or combination for programming a particular hot key is entered through the keyboard 6, the method determines which application is currently running in the foreground. On a multi-tasking OS such as the Windows CE OS available from Microsoft, an application can be running either in the foreground or in the background. An application or task running in the foreground is the one which a user is actively working with, and is in the foreground on the computer screen. Other applications or tasks may be running in the background at the same time. An example of a background task is one involving the preparation of a file for printing. At any one particular time, there can be at most one foreground application. Selecting and running an application on a H/PC running the Windows CE OS is a lot simpler as compared to locating an executable file in the file system. Most installation of applications on the H/PC will result in icons representing the applications being added to existing or newly created Program menus. These icons allow a user to easily locate and start an application by traversing the Start and Program menus provided by the Windows CE OS.

The sequence 24 begins in a START step 26. The keyboard driver 19 enters this sequence 24 when a user depresses or activates one or more keys on the keyboard 6. The sequence 24 next proceeds to a PROGRAM MODE DETECTED? decision step 28, where the processor 12 determines if a programming mode has been entered due to the activation of a programming key sequence or combination. An example of a programming key sequence is the prolonged depressing of a hot key for a few seconds. Another example of a programming key sequence is the depressing of a modifier key such as the CTRL, ALT or SHIFT key on the keyboard 6 followed by the hot key to be programmed. An example of a programming key combination is the simultaneous depression of a modifier key and the hot key to be programmed.

If no programming key sequence or combination is detected as determined in the PROGRAM MODE DETECTED? decision step 28, the sequence 24 terminates in an END step 30. In this END step 30, the keyboard driver 19 processes the entered key sequence in a usual manner known to those skilled in the art. However, if a programming key sequence or combination is detected as determined in the PROGRAM MODE DETECTED? decision step 28, the sequence 24 proceeds to a DETERMINE FOREGROUND APPLICATION step 32. In this step 32, the keyboard driver 19 determines the filename of an application running in the foreground. In the Windows CE environment, the keyboard driver 19 determines the filename by first obtaining a handle of a foreground window which runs the foreground application by invoking a GetForegroundWindow API call. Using the returned handle of the foreground window, the driver next obtains the process identity of the foreground application using a GetWindownthreadProcessld API call. The keyboard driver 19 next invokes an OpenProcess API call to access information related to the foreground application. If the API call is successful, the keyboard driver 19 proceeds to obtain the filename of the foreground application by invoking a GetModuleFileName API call. The GetModuleFileName API call is able to return a full pathname of the executable file of the foreground application.

The sequence 24 next proceeds to a FOREGROUND APPLICATION DETECTED? decision step 34. If no foreground application is detected as determined in this decision step 34, the sequence 24 proceeds to the END step 30, where no hot key programming action is taken for the entered key sequence. However, if it is determined that a foreground application is available, the sequence 24 preferably proceeds to a CONFIRMATION RECEIVED? decision step 36, where a user is prompted to choose between abandoning and proceeding with the hot key programming operation. If the user chooses to abandon the operation, the sequence 24 proceeds to the END step 30. If however the user chooses to proceed with the programming operation as determined in the CONFIRMATION RECEIVED? step 36, the sequence 24 proceeds to a CONFIGURE HOT KEY step 38. In this step 38, the keyboard driver 19 associates the foreground application to the hot key by writing the pathname of the foreground application to a record corresponding to the hot key in a configuration table or file. After a hot key 14 is programmed, the depression of the hot key 14 will cause the associated application to be launched. The OS 16 uses the filename in the configuration file as a parameter to a LaunchApp API call to launch the application. Finally, the sequence 24 terminates in the END step 30 to signify the end of the programming operation.

The disclosures in United States patent application no. 09/510,256, from which this application claims priority, and in the abstract accompanying this application are incorporated herein by reference.

## Claims

1. A method of programming a hot key on a computing device, the method comprising:
activating the hot key to initiate programming of the hot key in a programming mode;
selecting an application on the computing device; and
associating the selected application with the hot key such that activation of the hot key in an application-launching mode will launch the selected application.

2. A method according to Claim 1, comprising:
confirming programming of the hot key prior to associating the selected application with the hot key.

3. A method according to Claim 1 or 2, wherein associating the selected application with the hot key includes entering the pathname of an executable file of the selected application in a record corresponding to the hot key in a configuration table.

4. A method according to Claim 1 or 2, wherein activating the hot key includes prolonged activating of only the hot key to be programmed.

5. A method according to Claim 1 or 2, wherein activating the hot key includes activating a unique key sequence involving the hot key to be programmed.

6. A method according to Claim 1 or 2, wherein activating the hot key includes activating a unique key combination involving the hot key to be programmed.

7. A method according to any preceding claim, wherein selecting an application includes selecting an application which is currently running.

8. A method according to any preceding claim, wherein the computing device has a multi-tasking operating system which is able to run multiple applications simultaneously, with one application being run in the foreground and the other applications being run in the background and wherein selecting an application includes selecting the application being run in the foreground.

9. A program storage device readable by a computing device embodying a program of instructions executable by the computing device to program a hot key on the computing device, comprising:
means for activating the hot key to initiate programming of the hot key in a programming mode;
means for selecting an application on the computing device; and
means for associating the selected application with the hot key such that activation of the hot key in an application-launching mode will launch the selected application.
